# EUROPEAN PATENT SPECIFICATION

(11) **EP 4 146 907 B1**
(45) Date of publication and mention of the grant of the patent: **10.04.2024**
(21) Application number: 21721867.6
(22) Date of filing: 15.04.2021
(51) Int. Cl.: E21B 33/038, E21B 47/135, G02B 6/38, H01R 13/523

(54) **FEEDTHROUGH CONNECTOR**
DURCHFÜHRUNGSVERBINDER
CONNECTEUR DE TRAVERSÉE

(30) Priority: 05.05.2020 GB 202006652
(43) Date of publication of application: 15.03.2023
(73) Proprietor: Siemens Energy Global GmbH & Co. KG, 81739 München (DE)
(72) Inventor: COX, Thomas, Ulverston LA12 9HJ (GB); CHAMBERLAIN, Martin, Milnthorpe LA7 7DX (GB)
(86) International application number: PCT/EP2021/059825
(87) International publication number: WO 2021/223976

(56) References cited:
- EP-A1- 2 665 136
- CN-B- 104 993 298
- US-A1- 2017 175 476
- US-A1- 2020 044 382
- US-B2- 10 938 144

## Description

This invention relates to a feedthrough connector and associated method of assembly, in particular for subsea oil and gas operations.

Subsea, or underwater, connectors are designed to operate beneath the surface of the water. Typically, a subsea connector comprises two parts, generally known as plug and receptacle. The receptacle may include one or more conductor pins or optical connections and the plug may include corresponding plug sockets for the receptacle conductor pins or optical connections. The connection may be made topside (dry- mate), or subsea (wet-mate) and the specific design is adapted according to whether the connector is a wet-mate or dry-mate connector. Subsea connectors have various applications including power connectors which supply power to subsea equipment, or control and instrumentation connectors which exchange data, whether electrical or optical, between different pieces of subsea equipment, or between subsea equipment and topside devices. Connectors used at a wellhead have particular challenges and an improved connector is desirable. Examples of the related art are disclosed in US2017/175476 A1 (PAINTER DAVID A [US] et al), EP 2 665 136 A1 (SIEMENS AG [DE]), et al) and CN 104 993 298 B (CHINA AVIAT OPTICAL ELEC TECH).

In accordance with a first aspect of the present invention, a subsea plug connector part for a subsea wet-mateable connector comprising a receptacle connector part and a plug connector part; the plug connector part comprising a plug back end, a plug front end and an interface; wherein the interface comprises a first cold separable joint element at one end; wherein the plug front end comprises a second cold separable joint element; and wherein the first cold separable joint element and second cold separable joint element are adapted to join the interface to the plug front end.

The other end of the interface may be integral with the plug back end, or the plug front end, forming a permanent connection, but preferably, the interface further comprises a third cold separable joint at the other end of the interface and a fourth cold separable joint on the plug back end, adapted to join the interface and the plug back end.

The interface may comprise a metal tube or pipe.

The plug connector may comprise a bulkhead connector, combining the connector and penetrator in a single entity, but preferably, the plug connector part comprises a connector and a separate penetrator unit.

The receptacle connector part may comprise a connector and an integral penetrator.

Although, the cold separable joint element, particularly for the plug front end, may comprise a wet mateable connector part, preferably the cold separable joint element comprises a screw thread; a spring latch; a ball joint; a flexible joint; or a pipe joint.

The cold separable joint element may further comprise an elastomeric or polymeric seal.

In accordance with a second aspect of the present invention, a method of assembling a subsea plug connector part for a subsea wet-mateable connector comprising a receptacle connector part and a plug connector part in part of a wellhead unit comprises fitting a plug back end to a first part of the wellhead unit; sealing the plug back end to the wellhead unit and carrying out a pressure test; upon successful completion of the pressure test joining a plug front end via an interface with a cold separable joint.

This protects the diaphragm of the front end of the connector part by not subjecting it to the pressure test.

The method may further comprise, before or after carrying out the pressure test, joining a first end of the interface to the plug back end.

The first end of the interface may be joined to the plug back end via a cold separable joint.

The steps of fitting the plug back end to the wellhead unit, the interface to the plug back end and the plug front end to the interface are all carried out topside before deployment of the wellhead unit subsea.

Although, the wellhead unit may be a tubing hanger, preferably the wellhead unit comprises a tree body or valve block.

The method may further comprise fitting a receptacle connector part to a tubing hanger.

The subsea plug connector part may be a connector part according to the first aspect.

In accordance with a third aspect of the present invention, a method of installing a subsea wet mateable connector subsea, the method comprising assembling the plug and receptacle connector parts in subsea equipment by a method according to the second aspect; deploying a tubing hanger with the receptacle connector part subsea, deploying the wellhead subsea and making the connection of the plug connector part and receptacle connector part subsea.

An example of a feedthrough connector and associated method of installation in accordance with the present invention will now be described with reference to the accompanying drawings in which:
Figure 1 illustrates an example of part of a well head system and a connector according to the present invention installed therein;
Figures 2a and 2b illustrate different mountings on a Christmas tree that may be used with a connector according to the present invention;
Figure 3 illustrates more detail of a connector according to the present invention, in the system of Fig. 1;
Figure 4 illustrates an example of a connection for the connector of Fig.3; and,
Figure 5 is a flow diagram of a method of installing a feedthrough connector in according to the present invention in a wellhead system.

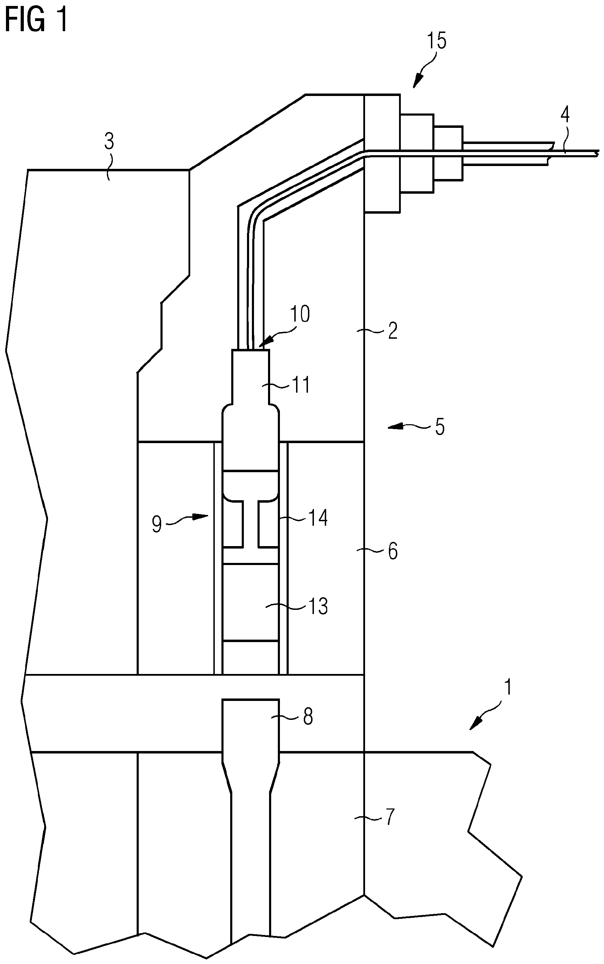

Feedthrough connector assemblies are used to pass power, or electrical or optical signals, between elements of a well head system. The wellhead system typically comprises a plurality of components, with various functions. Elements of this can be understood from Figs. 1, 2a, 2b and 3 described hereinafter. Above the seabed 1, a valve block or Christmas tree body 2 supports a main pipeline 3 for extracting oil or gas from a subsea well (not shown). A tubing hanger 7 provides support for the main pipeline 3 below the seabed and in some arrangements may support the main pipeline for a short distance above the seabed. A connector casing 5 extends along and around the main pipeline 3. This casing may be formed from part of the valve block 2, a coupling region 6 and the tubing hanger 7, or any combination thereof.

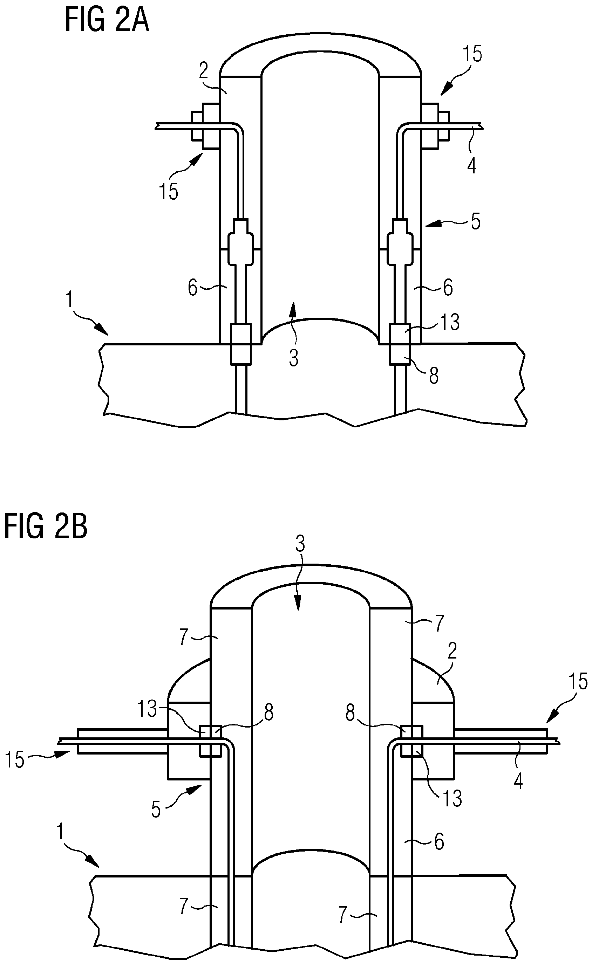

The tree 2 is typically installed on the seabed 1 and receives electrical or optical cables 4 from other parts of the subsea system which can then supply power or communications, for example to sensors, or actuators, within the well. The casing 5 supports multiple connectors, which may perform different functions, so their precise design and arrangement within the casing varies accordingly. In a typical subsea oil and gas production system, the well head valve block, or tree body 2, is adapted to receive a wet mate plug penetrator back end 11, which is connected to a cable 4 fed to a well head outlet 15. This cable to plug connection 10 is a dry mate, a fixed connection between the cable 4 and the plug penetrator back end 11, that has been made in air, generally at atmospheric pressure and well away from the hazardous conditions typically encountered in a downhole environment. Figs.2a and 2b illustrate different options for the feedthrough system and well head outlet 15. In a vertical feedthrough system, as shown in Fig.2a, the tree head 2 is above the tubing hanger 7 and the cable 4 from the back end 11 passes out of the casing through the outlet 15 mounted directly on the side of the casing, but is otherwise led vertically to the outlet. The wet mate connector parts are located close to the seabed, in the tree head 2 or tubing hanger 7. In a horizontal feed through system, as shown in Fig.2b, the tree head 2 is mounted radially outwardly of the tubing hanger 7 and the wet mate connector parts 8, 13 are alongside one another, above the seabed, with the cable 4 fed horizontally through the tree head 2 to the well head outlet 15.

For deployment subsea, the connectors between the tree 2 and tubing hanger 7 in a vertical, or horizonal, system are wet mate connectors, because the connection is not made until the two parts have been deployed subsea. The wet mate connectors comprise one part 8 adapted to be located at least partially in the tubing hanger 7 and another connector part 9 to be supported in the tree body or valve block, or other components of the well head. Other connectors mounted in other parts of the connector casing 5 may be dry mate connectors, for example the cable connector 10, within the valve block 2, or connectors further down in the tubing hanger.

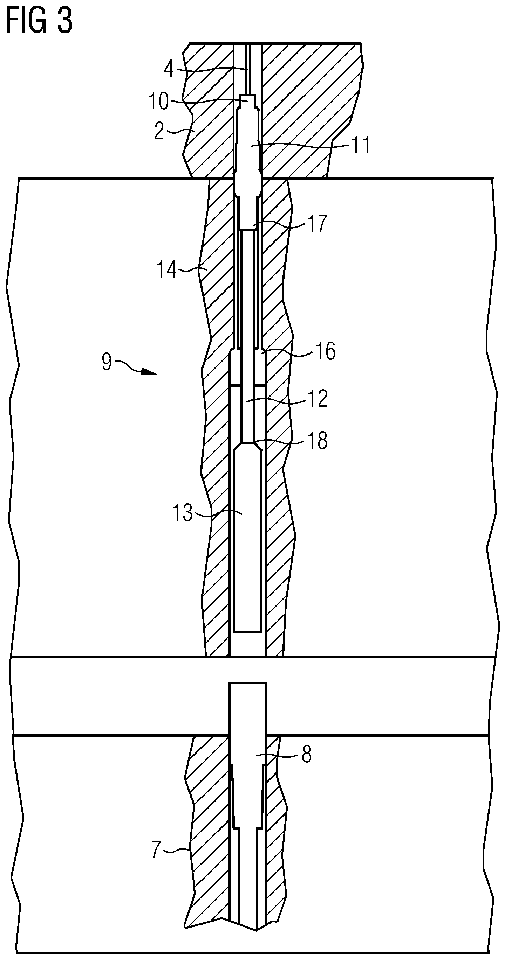

As can be seen in more detail in Fig.3, the connector parts comprise a plug 9 and a receptacle 8. For the examples shown, a vertical feedthrough system, the tubing hanger 7 to suspend production tubing or casing, is set at a location in the seabed 1, below the well head and remote from the tree or valve block. In this example, the tubing hanger is adapted to receive a wet-mate receptacle connector and the valve block 2 is adapted to receive a wet-mate plug connector. Between the valve block or tree body 2 and the tubing hanger 7, within the connector casing 5, an orientation sleeve 14 is provided. Conventionally, the receptacle 8 is installed in the tubing hanger 7, as the receptacle of a wet mate connector has fewer moving parts, or elastomeric parts and so is deemed less likely to fail and need to be removed and replaced than the plug. The plug 9 typically comprises moving parts in the shuttle pins and has elastomeric seals which are more sensitive to temperature, pressure and the harsh downhole environment. The tubing hanger 7 can only be removed by first removing the valve block or tree body 2, which is several metres across and weighs several tonnes. However, it is possible, although not so beneficial, to invert this arrangement and install the plug 9 in the tubing hanger 7 and the receptacle 8 in the valve block 2, or tree body.

Each of the wet mate connector parts 8, 9 are installed in their respective locations as part of the construction of the well head system and tubing hanger topside and then separately deployed and joined together, subsea. In the arrangement shown in Fig.3, the receptacle part 8 of the wet mate connector, in the tubing hanger 7, is initially exposed to seawater when first deployed subsea and only when the plug part 9 of the wet mate connector is brought into contact with the receptacle, does the pin of the receptacle part get cleaned off and separated from the seawater. Further down in the tubing hanger 7, not shown, there may be other dry mate connectors which have been connected topside before deployment of the tubing hanger. Although, the main pipeline 3 is physically separated from the connector casing 5, downhole connectors have to be manufactured to withstand the effects of the well fluids and pressures to cope with the unlikely event of the pipeline 3 fracturing and the connector casing 5 being flooded with well fluids. Additionally, testing may be carried out during installation which can subject the connectors to other pressures or fluids.

The plug part 9 of a feedthrough connector of the type described comprises a penetrator back-end 11, an interface 12 and a connector front end 13. Conventionally, the wet mate plug connector part including the front end, interface and penetrator, has been built as a single piece metal body, the parts being electron beam welded together off-site in a special chamber. Typically, the plug front end 13 comprises a pressure compensated, sealed unit with air above the plug front end. Before subsea deployment, the parts of the system have to be tested and one of the tests used is a gas pressure test in the area of the connectors by filling the gallery area between the plug connector part and receptacle connector part with a gas at high pressure. During this test, the pressure is applied and removed sufficiently fast that rapid gas decompression (RGD) may be an issue. As a result, it is not possible to perform this testing with typical wet mate feedthrough connectors in place. The single piece unit is frequently oil filled and uses an elastomer diaphragm to provide pressure or temperature compensation. The elastomer diaphragm can be prone to absorbing gas during the pressure test and may then be damaged by the gas escaping during decompression.

Damage or failure of the more fragile parts of the feedthrough connector, in particular the elastomeric diaphragm, may require the entire connector to be replaced. However, removing the connector invalidates any pressure testing carried out and thus the whole assembly may need to be retested. In some cases, the failed or damaged connector is just left in place and functionality is lost. Other operator workarounds for this include omitting the pressure test entirely, meaning that some standards may not be met, controlling the decompression rate to avoid rapid gas decompression, or testing the area using a dummy connector to seal the interface and then removing that and replacing it with the connector later. Omitting the test or using a dummy connector does not gas test the actual components that will be sent into service subsea, leaving open concerns about reliability. Controlling the rate of decompression requires a fine pressure control valve and takes far longer than desired.

The present invention addresses these problems by constructing the plug part 9 of the wet mate connector in multiple, separable, sections. A first section is the plug penetrator back end 11, which is relatively robust and can be sealed into the valve block 2 and pressure tested on its own. A cold separable joint element 20 at one end of the interface 12 is then fitted to the back end 11 by means of a cold separable joint element 17. The other end of the interface is fitted by a cold separable joint element 20 at the other end of the interface to another cold separable joint element 18 of the removable front end 13.

Alternatively, one end of the interface 12 is permanently attached to the back end 11 before the pressure test is carried out and the other end of the interface is connected to the front end by a cold separable joint element 20 and the front end cold separable joint 18 which are only connected after the pressure test has been completed. In this way, the front end 13 can be removed from the plug connector part 9 during the pressure test, without compromising the overall pressure retention of the connector because the back end 11 stays in place once fitted. This construction and assembly of the wet mate connector part 9 allows the operator to choose the interface length to suit their requirements, whilst using standard back end 11 and front end 13 parts. The separable joints 17, 18, 20 comprise cold separable joints, i.e., a joint that does not require or create heat when the joint elements are connected.

A hot connection, i.e., any work involving welding, grinding, brazing, soldering or other procedures involving or creating heat is generally not permissible in site operations where inflammable materials may be present in the vicinity. If the connector were to be built on site using hot work process, this would require particular safety regulations to be met which might be difficult and expensive. Usual factory acceptance testing would have to be performed on site by skilled workers and certain tests may not be possible, such as hydrostatic testing of the connector. Given the problems associated with hot connections on site, either to connect or remove parts, cold connections are employed.

The combination of back end 11, interface 12 and front end 13 does not have to be manufactured off site, but can be assembled topside, immediately before deployment. Although in theory, one or other of the joints could be made as wet-mate connectors, for example having a double ended wet mate connector with the front end, to allow for easier replacement if there is a fault in the front end after deployment subsea, in practice the additional cost and complexity mean that the cold connection is typically a dry mate connection, assembled in air, topside, rather than subsea.

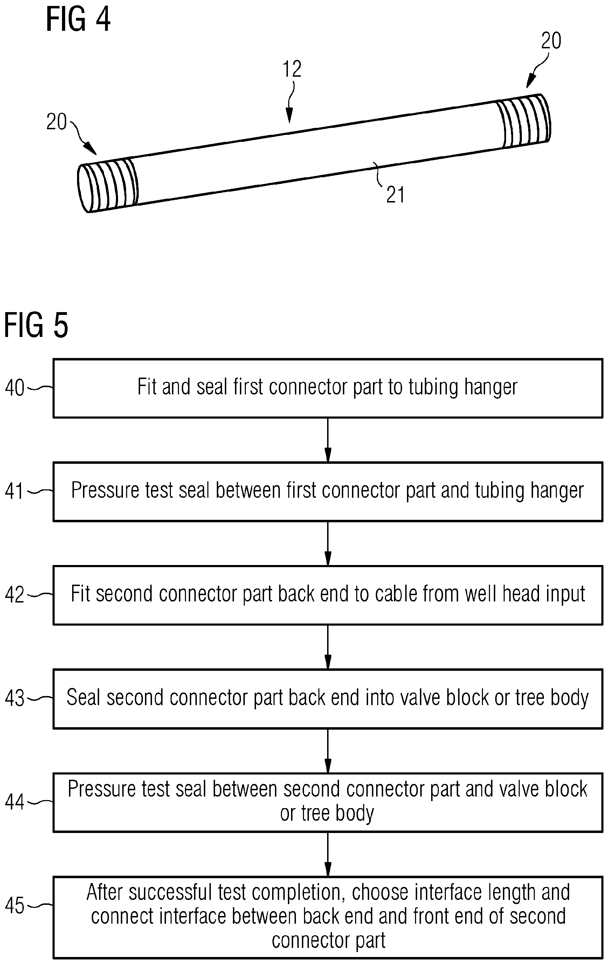

As illustrated in Fig.4, in its simplest form, the cold separable connection may be a screw thread connection between an end of the interface 12 and the back end and front end of the connector part, with a pressure seal, in particular a face seal, or conical seal, or alternatively, an O-ring, or polymeric spring seal. An alternative is to use a snap j oint with an O-ring, or polymeric spring seal, as the arrangement has minimal axial load. This can be screwed up by hand and tightened with a spanner. The interface 12 is typically a section of pipe or tube made of suitably corrosion resistant material, in particular a metal complying with ISO15156, such as certain stainless steel or nickel alloys, which removes the need for additional compatibility testing, so a suitable screw thread 20, can be made in the ends of a metal length or rod 21, with a corresponding screw thread inside each of the plug back end and plug front end, for the rod 21 to screw into. Typically, parts of the orientation sleeve are removed to allow access to carry out the connection, for example to enable a spanner to be used, so the connection of the mandrel to the plug parts is carried out within the orientation sleeve 14, which is adapted to receive the wet mate plug front end connector part 13 when connected to the wet mate plug penetrator back end 11 via the wet mate plug mandrel 12, which is also within the orientation sleeve. In some embodiments, the orientation sleeve may be left in place.

Alternative joint types include using a spring latch with a seal requiring no additional locking method (i.e., plug and play), or a flexible joint such as a ball joint or similar to allow for misalignment when making the connection. In these examples, the connection is made by a simple push fit, rather than having to screw up the interface rod. This would potentially allow the connection to be made without having to take the cover of the orientation sleeve off and makes the process quicker than using a screw threaded interface. Another option is to use commercial pipe joints, such as autoclave fittings, or an integral pipe j oint, such as cone and thread joints. When joined, the joints may be sealed using elastomer or polymer seals with a securing feature such as threads, locking rings, or grub screws.

Fig.5 illustrates a method of installing a subsea wet mate connector in a well head system. The majority of the steps are carried out topside, i.e. above the water and the order may vary slightly from that shown in Fig.5, for example, the fitting of the receptacle part to the tubing hanger may be carried out in parallel with, or after, the steps of fitting the plug part to the valve block. The wet-mateable subsea connector comprises a plug part 9 and receptacle part 8. The example assumes that the receptacle is adapted to be fitted to the tubing hanger 7 and the plug to the tree or valve block 2, but as explained hereinbefore, this plug may be fitted to the tubing hanger 7 and the receptacle to the tree, or valve block 2. In this example, the first connector part 8 is fitted 40 to the tubing hanger 7 and sealed. The seal between the first connector part and tubing hanger is pressure tested 41 and passed fit for use if the test requirements are met. For the second connector part, the orientation sleeve 14 may first need to be opened up to allow access to the base of the valve block 2 within the connector casing 6. The penetrator back end 11 of the second connector part 9 is dry mated 42 with a dry mate connection 10, such as a solder j oint, crimp, screw j oint, or optical splice, to a cable 4 that has been fed through an opening in a base of the tree or valve block 2 from a well head outlet 15. The penetrator back end 11 is then pushed up into place in contact with the valve block. The penetrator is then sealed 43 to the valve block. The penetrator back end 11 and the valve block 2 may comprise cone seals. The seal may be made by doing up a retaining ring 16 which causes the cone seals to deform into one another to form the primary pressure barrier seal. Additionally, an elastomeric, polymeric or metallic seal may be provided on the penetrator back end 11.

A pressure test of the penetrator to valve block seal is then carried out 44. After successful completion of the test to the required standard, a length of interface 12, for example, a wet-mate plug mandrel in the form of a metal pipe or tube 21, is chosen according to the operator's requirements and this is connected 45, by connections 17, 18, 20 between the part of the plug penetrator back end 11 that is outside the valve block 2 and a plug connector front end 13. In this example, the connections 17, 18 at each end of the interface are cold separable joints. In the alternative example, mentioned above, where one end of the interface 12 is permanently attached to the back end 11 before the pressure test is carried out and the other end of the interface has a cold separable connection 18 to the front end, then part of step 45 is carried out before the pressure test, there is only one cold separable connection and this cold separable connection 18 is only connected at step 45, after the pressure test has been completed.

The ability to leave connection of the front end until after the pressure test has been completed has the advantage that it allows this part of the assembly to be carried out topside by the operator immediately before deployment of the tree and the length of the interface chosen by the operator can be connected to a standard plug front end without specialist skills. Conventional "hot" connections, such as electron beam welding cannot be carried out topside because of the risk of fire or explosion, the size of the well head making it impractical to have a sufficiently large vacuum chamber and its weight making it impractical to put it into one even if it were large enough, so hot connections have to be carried out in advance and offsite. This lacks the flexibility that the present invention provides to the operator. By the method of the present invention, the cold separable joint can be quickly, reliably and repeatedly assembled or disassembled on site. A cold joint may take only minutes to assemble or disassemble, as compared with a hot joint which may take several hours to assemble.

There are many other advantages in this design and method of assembly and testing. A cold joint reduces the risk of fire or explosion due to inflammable materials which may be present in the vicinity. A cold joint may be carried out with limited access, such as 90° access, which is sufficient to be able to operate a spanner, rather than the 360° access, that is needed for welding. A cold joint may be cheaply and quickly pressure tested for joint verification, if that is required, without extensive 360° inspection or verification such as dye penetration, CT scanning or x-ray. A cold joint may be connected multiple times without damage and without requiring special jigs for alignment. This makes it viable to connect or disconnect as required even at short notice. A cold joint typically requires few specialist tools, e.g. a torque wrench and adaptor, whereas a hot joint may require extensive equipment. A cold joint may be assembled without requiring any power allowing easier installation.

As previously discussed, there are benefits to the operator, in that the operator can install the connector without the front end and perform the gas pressure testing on the gallery, between the Christmas tree and the tubing hanger, giving added assurance of reliability. Should there be the need, the operator is able to replace the front end quickly and easily without requiring significant testing, which significantly reduces the test and replacement connector costs, since only the damaged component - typically the front end - needs to be replaced. A cold electrical joint may be carried out by operator, rather than by specialist supplier workers, e.g., with specialist soldering, or post soldering void detection skills. This reduces costs and lead-times for the operator. The modular system of the present invention with separable joints, means that the front end can be built and stocked and used in multiple connectors, reducing lead-times and allowing users to maintain their own stocks of standardized front end units for direct replacement if needed. A standardized joint allows the front end to be tested and verified without the remainder of the connector, so reducing testing setups, costs and lead-times.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope of the invention in its aspects.

It should be noted that the term "comprising" does not exclude other elements or steps and "a" or "an" does not exclude a plurality. Elements described in association with different embodiments may be combined. It should also be noted that reference signs in the claims should not be construed as limiting the scope of the claims. Although the invention is illustrated and described in detail by the preferred embodiments, the invention is not limited by the examples disclosed, and other variations can be derived therefrom by a person skilled in the art without departing from the scope of the invention.

## Claims

1. A subsea plug connector part for a subsea wet-mateable connector comprising a receptacle connector part (8) and a plug connector part (9); the plug connector part (9) comprising a plug back end (11), a plug front end (13) and an interface (12); wherein the interface (12) comprises a first cold separable joint element (20) at one end; **characterized in that** the plug front end (13) comprises a second cold separable joint element (18); and wherein the first cold separable joint element (20) and second cold separable joint element (18) are adapted to join the interface (12) to the plug front end (13).

2. A connector part according to claim 1, wherein the interface (12) further comprises a third cold separable joint (20) at the other end of the interface (12) and a fourth cold separable joint (17) on the plug back end (11), adapted to join the interface (12) and the plug back end (11).

3. A connector part according to claim 1 or claim 2, wherein the interface (12) comprises a metal tube or pipe (21).

4. A connector part according to any preceding claim, wherein the plug connector part (9) comprises a connector and a separate penetrator unit.

5. A connector part according to any preceding claim, wherein the receptacle connector part (8) comprises a connector and an integral penetrator.

6. A connector part according to any preceding claim, wherein the cold separable joint element (17, 18, 20) comprises a screw thread; a spring latch; a ball joint; a flexible joint; or a pipe joint.

7. A connector part according to any preceding claim, wherein the cold separable joint element (17, 18, 20) further comprises an elastomeric or polymeric seal.

8. A method of assembling a subsea plug connector part according to claim 1 for a subsea wet-mateable connector comprising a receptacle connector part (8) and a plug connector part (9) in part of a wellhead unit; the method comprising fitting a plug back end (11) to a first part of the wellhead unit; sealing the plug back end (11) to the wellhead unit and carrying out a pressure test; upon successful completion of the pressure test joining a plug front end (13) to the plug back end (11) via an interface (12) with a cold separable joint (17, 18, 20).

9. A method according to claim 8, wherein the method further comprises before or after carrying out the pressure test, joining a first end of the interface (12) to the plug back end (11).

10. A method according to claim 8 or claim 9, wherein the first end of the interface (12) is joined to the plug back end (11) via a cold separable joint (17, 20).

11. A method according to any of claims 8 to 10, wherein the wellhead unit comprises a tree body (2) or valve block.

12. A method according to any of claims 8 to 10, wherein the method further comprises fitting a receptacle connector part (8) to a tubing hanger (7).

13. A method according to any of claims 8 to 12, wherein the subsea plug connector part is a connector part according to any of claims 1 to 7.

14. A method of installing a subsea wet mateable connector subsea, the method comprising assembling the plug and receptacle connector parts (8, 9) in subsea equipment by a method according to any of claims 8 to 13; deploying a tubing hanger (7) with the receptacle connector part (8) subsea, deploying the wellhead subsea and making the connection of the plug connector part (9) and receptacle connector part (8) subsea.

## Patentansprüche

1. Unterseeisches Steckverbinderbauteil für einen unterseeischen nass koppelbaren Verbinder, umfassend ein Aufnahmeverbinderbauteil (8) und ein Steckverbinderbauteil (9); wobei das Steckverbinderbauteil (9) ein hinteres Steckerende (11), ein vorderes Steckerende (13) und ein Zwischenstück (12) umfasst; wobei das Zwischenstück (12) ein erstes kalt trennbares Verbindungselement (20) an einem Ende umfasst; **dadurch gekennzeichnet, dass** das vordere Steckerende (13) ein zweites kalt trennbares Verbindungselement (18) umfasst; und wobei das erste kalt trennbare Verbindungselement (20) und das zweite kalt trennbare Verbindungselement (18) dafür eingerichtet sind, das Verbindungsstück (12) mit dem vorderen Steckerende (13) zu verbinden.

2. Verbinderbauteil nach Anspruch 1, wobei das Verbindungsstück (12) ferner eine dritte kalt trennbare Verbindung (20) an dem anderen Ende des Verbindungsstücks (12) und eine vierte kalt trennbare Verbindung (17) an dem hinteren Steckerende (11) umfasst, die dafür eingerichtet sind, das Verbindungsstück (12) mit dem hinteren Steckerende (11) zu verbinden.

3. Verbinderbauteil nach Anspruch 1 oder Anspruch 2, wobei das Verbindungsstück (12) eine Metallröhre oder ein Metallrohr (21) umfasst.

4. Verbinderbauteil nach einem vorhergehenden Anspruch, wobei das Steckverbinderbauteil (9) einen Verbinder und eine separate Durchstoßkörpereinheit umfasst.

5. Verbinderbauteil nach einem vorhergehenden Anspruch, wobei das Aufnahmeverbinderbauteil (8) einen Verbinder und einen integrierten Durchstoßkörper umfasst.

6. Verbinderbauteil nach einem vorhergehenden Anspruch, wobei das kalt trennbare Verbindungselement (17, 18, 20) ein Schraubgewinde; einen Federriegel; ein Kugelgelenk; eine flexible Verbindung oder eine Rohrverbindung umfasst.

7. Verbinderbauteil nach einem vorhergehenden Anspruch, wobei das kalt trennbare Verbindungselement (17, 18, 20) ferner eine Elastomer- oder Polymerdichtung umfasst.

8. Verfahren zum Montieren eines unterseeischen Steckverbinderbauteils nach Anspruch 1 für einen unterseeischen nass koppelbaren Verbinder, umfassend ein Aufnahmeverbinderbauteil (8) und ein Steckverbinderbauteil (9) als Teil einer Bohlochkopfeinheit; wobei das Verfahren das Befestigen eines hinteren Steckerendes (11) an einem ersten Bauteil der Bohlochkopfeinheit; das Abdichten des hinteren Steckerendes (11) an der Bohlochkopfeinheit und das Ausführen einer Druckprüfung; nach erfolgreichem Abschluss der Druckprüfung das Verbinden eines vorderen Steckerendes (13) mit dem hinteren Steckerende (11) über ein Verbindungsstück (12) mit einer kalt trennbaren Verbindung (17, 18, 20) umfassend.

9. Verfahren nach Anspruch 8, wobei das Verfahren ferner vor oder nach dem Ausführen der Druckprüfung das Verbinden eines ersten Endes des Verbindungsstücks (12) mit dem hinteren Steckerende (11) umfasst.

10. Verfahren nach Anspruch 8 oder Anspruch 9, wobei das erste Ende des Verbindungsstücks (12) über eine kalt trennbare Verbindung (17, 20) mit dem hinteren Steckerende (11) verbunden wird.

11. Verfahren nach einem der Ansprüche 8 bis 10, wobei die Bohlochkopfeinheit einen Baumkörper (2) oder Ventilblock umfasst.

12. Verfahren nach einem der Ansprüche 8 bis 10, wobei das Verfahren ferner das Befestigen eines Aufnahmeverbinderbauteils (8) an einer Rohraufhängung (7) umfasst.

13. Verfahren nach einem der Ansprüche 8 bis 12, wobei das unterseeische Steckverbinderbauteil ein Verbinderbauteil nach einem der Ansprüche 1 bis 7 ist.

14. Verfahren zum unterseeischen Installieren eines unterseeischen nass koppelbaren Verbinders, wobei das Verfahren das Montieren des Steck- und des Aufnahmeverbinderbauteils (8, 9) in unterseeischer Ausrüstung durch ein Verfahren nach einem der Ansprüche 8 bis 13; das unterseeische Einsetzen einer Rohraufhängung (7) mit dem Aufnahmeverbinderbauteil (8), das unterseeische Einsetzen des Bohlochkopfes und das unterseeische Herstellen der Verbindung des Steckverbinderbauteils (9) und des Aufnahmeverbinderbauteils (8) umfasst.

## Revendications

1. Partie de connecteur à fiche sous-marin d'un connecteur sous-marin compatible à l'humidité, comprenant une partie (8) de réceptacle de connecteur et une partie (9) de fiche de connecteur ; la partie (9) de fiche de connecteur comprenant une extrémité (11) arrière de fiche, une extrémité (13) avant de fiche et une interface (12) ; dans laquelle l'interface (12) comprend un premier élément (20) d'assemblage séparable à froid à une extrémité ; **caractérisée en ce que**
l'extrémité (13) avant de la fiche comprend un deuxième élément (18) d'assemblage séparable à froid ; et dans lequel le premier élément (20) d'assemblage séparable à froid et le deuxième élément (18) d'assemblage séparable à froid sont propres à assembler l'interface (12) à l'extrémité (13) avant de la fiche.

2. Partie de connecteur suivant la revendication 1, dans laquelle l'interface (12) comprend en outre, un troisième assemblage (20) séparable à froid à l'autre extrémité de l'interface (12) et un quatrième assemblage (17) séparable à froid sur l'extrémité (11) arrière de la fiche, propres à assembler l'interface (12) et l'extrémité (11) arrière de la fiche.

3. Partie de connecteur suivant la revendication 1 ou la revendication 2, dans laquelle l'interface (12) comprend un tube ou un tuyau (21) métallique.

4. Partie de connecteur suivant l'une quelconque des revendications précédentes, dans laquelle la partie (9) de fiche de connecteur comprend un connecteur et une unité distincte de pénétrateur.

5. Partie de connecteur suivant l'une quelconque des revendications précédentes, dans laquelle la partie (8) de réceptacle de connecteur comprend un connecteur et un pénétrateur d'une seule pièce.

6. Partie de connecteur suivant l'une quelconque des revendications précédentes, dans laquelle l'élément (17, 18, 20) d'assemblage séparable à froid comprend un filetage de vis ; un verrou à ressort ; un embout à rotule ; un assemblage souple ou un assemblage à tuyau.

7. Partie de connecteur suivant l'une quelconque des revendications précédentes, dans laquelle l'élément (17, 18, 20) d'assemblage séparable à froid comprend en outre un joint élastomère ou polymère.

8. Procédé d'assemblage d'une partie de connecteur à fiche sous-marin suivant la revendication 1 pour un connecteur sous-marin compatible à l'humidité, comprenant une partie (8) de réceptacle de connecteur et une partie (9) de fiche de connecteur en partie d'une unité de tête de puits ; le procédé comprenant, adapter une extrémité (11) arrière de la fiche à une première partie de l'unité de tête de puits ; sceller l'extrémité (11) arrière de la fiche à l'unité de tête de puits et effectuer un test de pression ; après achèvement avec succès du test de pression, assembler une extrémité (13) avant de la fiche à l'extrémité (11) arrière de la fiche par l'intermédiaire d'une interface (12) par un assemblage (17, 18, 20) séparable à froid.

9. Procédé suivant la revendication 8, dans lequel le procédé comprend en outre, avant ou après avoir effectué le test de pression, assembler une première extrémité de l'interface (12) à l'extrémité (11) arrière de la fiche.

10. Procédé suivant la revendication 8 ou la revendication 9, dans lequel on assemble la première extrémité de l'interface (12) à l'extrémité (11) arrière de la fiche par un assemblage (17, 20) séparable à froid.

11. Procédé suivant l'une quelconque des revendications 8 à 10, dans lequel l'unité de tête de puits comprend un corps (2) d'arbre ou un bloc de raccordement.

12. Procédé suivant l'une quelconque des revendications 8 à 10, dans lequel le procédé comprend, en outre, adapter une partie (8) de réceptacle de connecteur à un dispositif (7) de suspension de tubage.

13. Procédé suivant l'une quelconque des revendications 8 à 12, dans lequel la partie de fiche de connecteur sous-marin est une partie de connecteur suivant l'une quelconque des revendications 1 à 7.

14. Procédé d'installation sous l'eau d'un connecteur sous-marin compatible à l'humidité, le procédé comprenant assembler les parties (8, 9) de fiche et de réceptacle de connecteur en un équipement sous-marin par un procédé suivant l'une quelconque des revendications 8 à 13 ; déployer un dispositif (7) de suspension de tubage sous l'eau avec la partie (8) de réceptacle de connecteur, déployer la tête de puits sous l'eau et faire sous l'eau l'assemblage de la partie (9) de la fiche de connecteur et de la partie (8) du réceptacle de connecteur.
